# EUROPÄISCHE PATENTANMELDUNG

(11) **EP 3 501 892 A1**
(43) Veröffentlichungstag der Anmeldung: **26.06.2019**
(21) Anmeldenummer: 18214033.5
(22) Anmeldetag: 19.12.2018
(51) Int. Cl.: B60P 3/34

(54) **WOHNRAUMERWEITERUNG FÜR WOHNWAGEN UND WOHNWAGEN**

(30) Priorität: 22.12.2017 DE 102017131078
(71) Anmelder: LMC Caravan GmbH & Co. KG, 48336 Sassenberg (DE)
(72) Erfinder: Müller, Wilhelm, 48336 Sassenberg (DE)
(74) Vertreter: Otten, Roth, Dobler & Partner mbB Patentanwälte

(57) **Zusammenfassung**

Vorgeschlagen wird eine Wohnraumerweiterung (1) für einen Wohnwagen (14) oder dergleichen Reise- oder Freizeitfahrzeug mit einem Chassis (2) und einem darauf angeordneten Wohnaufbau (3), wobei die Wohnraumerweiterung (1) als schwenkbare Wohnraumerweiterung (1) ausgestaltet ist und wenigstens zwei Schwenkelemente (4, 4a) umfasst, wobei ein erstes Schwenkelement (4) eine Oberseite (5) der Wohnraumerweiterung(1) bildet und wobei ein zweites Schwenkelement (4a) eine Unterseite (6) der Wohnraumerweiterung (1) bildet, und wobei die Wohnraumerweiterung (1) zumindest ein Stützmittel (7) umfasst, wobei das zumindest eine Stützmittel (7) als Abstützelement der Unterseite (6) ausgestaltet ist und das zweite Schwenkelement (4a) an dem Chassis (2) abgestützt ist.

## Beschreibung

Die Erfindung betrifft eine Wohnraumerweiterung für einen Wohnwagen gemäß dem Oberbegriff des Anspruchs 1 sowie einen Wohnwagen gemäß dem Oberbegriff der Ansprüche 10 und 11.

Im Sinne der Erfindung ist ein Wohnwagen ein unmotorisiertes Freizeit- oder Reisefahrzeug. Die Erfindung lässt sich im Folgenden auch auf motorisierte Reise- oder Freizeitfahrzeuge mitlesen.

Wohnraumerweiterungen für Freizeit- oder Reisefahrzeuge, beispielsweise Wohnwägen, Wohnmobile, etc. bzw. derartige Fahrzeuge mit Wohnraumerweiterung sind aus dem Stand der Technik bekannt. Wohnraumerweiterungen sind hierbei als Erweiterungen eines Wohnraumraums solcher Fahrzeuge zu verstehen, insbesondere zur Bereitstellung zusätzlicher Liege- bzw.- Schlafplätze.

Beispielsweise kennt man aus der DE 195 48 230 A1 eine Wohnraumerweiterung in Form einer rechteckförmigen, ausfahrbaren Verlängerung für Reisemobile. Einen Wohnanhänger mit ausklappbarer Veranda kennt man aus der DE 1 774 005 U. Insbesondere bei der DE 1 774 005 U besteht die Problematik der Abstützung der Wohnraumerweiterung, die einerseits sicher und stabil zu erfolgen hat und andererseits einfach zu errichten sein soll. Dabei ist eine Abstützung, die auf dem Untergrund, auf welchem ein entsprechendes Freizeitfahrzeug abgestellt ist, oftmals nachteilig, beispielsweise aufgrund von Unebenheiten des Untergrunds bzw. Verschmutzungen des Untergrunds.

Aufgabe der Erfindung ist es, eine einfach und schnell zu errichtende bzw. demontierende Abstützung einer Wohnraumerweiterung eines Reise- oder Freizeitfahrzeugs bereitzustellen.

Die Aufgabe wird durch die kennzeichnenden Merkmale des Anspruchs 1 gelöst. Zweckmäßige und vorteilhafte Weiterbildungen der Erfindung sind Gegenstand der Unteransprüche.

Ausgehend von einer Wohnraumerweiterung für einen Wohnwagen oder dergleichen Reise- oder Freizeitfahrzeug mit einem Chassis und einem darauf angeordneten Wohnaufbau, wobei die Wohnraumerweiterung als schwenkbare Wohnraumerweiterung ausgestaltet ist und wenigstens zwei Schwenkelemente umfasst, wobei ein erstes Schwenkelement eine Oberseite der Wohnraumerweiterung bildet und wobei ein zweites Schwenkelement eine Unterseite der Wohnraumerweiterung bildet, und wobei die Wohnraumerweiterung zumindest ein Stützmittel umfasst, ist erfindungsgemäß vorgesehen, dass das zumindest eine Stützmittel als Abstützelement der Unterseite ausgestaltet ist und das zweite Schwenkelement an dem Chassis abgestützt ist.

Durch die Anbindung des Stützmittels an dem Chassis wird eine besonders einfache und schnelle Möglichkeit der Anbringung einer Abstützung der Wohnraumerweiterung ermöglicht. Aufgrund der tragenden Eigenschaften des Chassis kann zudem eine besonders stabile bzw. sichere Abstützung der Wohnraumerweiterung erreicht werden.

Eine besonders bevorzugte Ausgestaltung der Erfindung kann vorsehen, dass das zumindest eine Stützmittel den Wohnaufbau teilweise untergreifend angeordnet ist. Neben einer besonders einfachen, schnellen und stabilen bzw. sicheren Abstützung der Wohnraumerweiterung kann erreicht werden, dass der Wohnaufbau frei von Haltemitteln, Befestigungsmitteln, etc. zum Halten, Befestigen, etc. des Stützmittels ist. So können Beschädigungen am Wohnaufbau hierdurch vermieden werden. Weiterhin kann eine unbeabsichtigte einfache Entfernung des Stützmittels unterbunden werden.

Um ein besonders stabiles Abstützen der Wohnraumerweiterung zu ermöglichen, kann in einer vorteilhaften Weiterbildung der Erfindung vorgesehen sein, dass das zumindest eine Stützmittel einstückig ausgebildet ist.

Einer weitere vorteilhafte Weiterbildung der Erfindung kann vorsehen, dass das zumindest eine Stützmittel gekrümmt, gebogen oder abgewinkelt ausgebildet ist. Hierdurch kann eine vereinfachte Montage bzw. Demontage des Stützmittels ermöglicht werden.

Um eine besonders einfache und schnelle Montage bzw. Demontage des Stützmittels zu ermöglichen, bei dem die Gefahr von Beschädigungen des Wohnaufbaus minimiert sind, kann in einer Weiterbildung der Erfindung vorgesehen sein, dass das zumindest eine Stützmittel L-förmig mit einem erstem Schenkel und einem zweitem Schenkel ausgebildet ist, wobei ein freies Ende des ersten Schenkels mit dem zweiten Schwenkelement und ein freies Ende des zweiten Schenkels mit dem Chassis verbunden ist.

Um ein besonders einfaches Schwenken des ersten Schwenkelements zu ermöglichen, kann im Rahmen der Erfindung vorgesehen sein, dass das erste Schwenkelement wenigstens ein Schwenkmittel, vorzugsweise eine Gasdruckfeder umfasst, welches mit dem Wohnaufbau verbunden ist.

Besonders vorteilhaft ist, wenn das zweite Schwenkelement und das erste Schwenkelement über ein flexibles Verbindungsmittel, insbesondere Zeltwand, miteinander verbunden sind. Auf diese Weise kann eine besonders einfach zu errichtende Wohnraumerweiterung bereitgestellt werden.

Um eine besonders sichere Abstützung des zweiten Schwenkmittels zu erreichen, kann die Erfindung in vorteilhafter Ausgestaltung vorsehen, dass das wenigstens eine Stützmittel an einer Fläche, vorzugsweise an einem rahmenfernen Bereich der Fläche angeordnet und insbesondere verschraubt ist. Überdies kann eine verbesserte Kraftverteilung bei der Abstützung erfolgen, so dass die Stabilität der Abstützung erhöht wird.

Besonders praktisch ist, wenn das zumindest eine Stützmittel an einer am Chassis angeordneten Stütze befestigt ist, da hierfür bereits eine Möglichkeit am Chassis gegeben bzw. vorhanden ist, das Stützmittel zu befestigen. Zusätzliche Erweiterungen bzw. Änderungen am Chassis können somit entfallen.

In einer Weiterbildung kann die Erfindung vorsehen, dass die Wohnraumerweiterung zumindest teilweise durch ein aufblasbares Zelt oder eine aufblasbare Zeltwand gebildet wird, wobei das aufblasbare Zelt oder die aufblasbare Zeltwand ein drop-stitch Material umfasst oder aus einem drop-stitch Material gefertigt ist. Eine derartige Wohnraumerweiterung kann sich besonders einfach und schnell errichtet werden und besonders stabil und überdies besonders langlebig sein.

Eine ebenfalls sehr schnelle Errichtung der Wohnraumerweiterung kann im Rahmen der Erfindung dadurch ermöglicht werden, dass die Wohnraumerweiterung zumindest teilweise durch ein aufblasbares Zelt oder eine aufblasbare Zeltwand gebildet wird, wobei das aufblasbare Zelt oder die aufblasbare Zeltwand zur Bereitstellung statisch tragender Eigenschaften des Zelts oder der Zeltwand wenigstens einen Luftkanal, bevorzugt mehrere insbesondere nicht miteinander kommunizierende Luftkanäle umfasst.

Die Erfindung betrifft weiterhin einen Wohnwagen, umfassend ein Chassis und einem darauf angeordneten Wohnaufbau, wobei der Wohnwagen eine erfindungsgemäße Wohnraumerweiterung umfasst.

Weiterhin wird ein Wohnwagen vorgeschlagen, umfassend ein Chassis und einem darauf angeordneten Wohnaufbau, wobei erfindungsgemäß vorgesehen ist, dass der Wohnwagen zwei Schwenkelemente umfasst, wobei ein erstes Schwenkelement als Außenelement ausgebildet ist und wobei ein zweites Schwenkelement als Innenelement ausgebildet ist, wobei zur Bereitstellung einer Wohnraumerweiterung das Außenelement in Richtung einer Oberseite und das Innenelement in Richtung einer Unterseite schwenkbar ausgebildet ist und wobei das Außenelement und das Innenelement über ein flexibles Verbindungsmittel, insbesondere Zeltwand, miteinander verbunden sind.

Eine derartige Wohnraumerweiterung ist besonders einfach und schnell zu errichten bzw. zu demontieren. Montage und Demontage können insbesondere durch eine Person bewerkstelligt werden, wobei spezielles Werkzeug hierfür nicht erforderlich ist. Zudem ist eine derartige Wohnraumerweiterung bei Nichtgebrauch besonders platz- und gewichtssparend im Fahrzeug verstaubar.

Eine vorteilhafte Weiterbildung der Erfindung kann vorsehen, dass das flexible Verbindungsmittel als aufblasbare Zeltwand oder als aufblasbares Zelt ausgebildet ist. Hierdurch kann eine Wohnraumerweiterung für den Wagen bereitgestellt werden, die besonders einfach und schnell aufbaubar und abbaubar sein kann.

Eine Weiterbildung der Erfindung kann auch vorsehen, dass das flexible Verbindungsmittel ein drop-stitch Material umfasst oder aus einem drop-stitch Material gefertigt ist oder dass das flexible Verbindungsmittel zur Bereitstellung tragender Eigenschaften des flexiblen Verbindungsmittels wenigstens einen Luftkanal umfasst. Derartige Verbindungsmittel sind einerseits besonders stabil, sofern sie ein drop-stitch Material umfassen oder aus einem drop-stitch Material gefertigt sind und können darüber hinaus besonders einfach und schnell errichtet werden, insbesondere auch für den Fall, dass das flexible Verbindungsmittel zur Bereitstellung tragender Eigenschaften des flexiblen Verbindungsmittels wenigstens einen Luftkanal umfasst.

Drop-stitch kennt der Fachmann. Dabei handelt es sich in der Regel um zwei Kunststoff-Schichten, die mit Nylonfäden verwoben sind. Das Prinzip der drop-stitch-Konstruktion beruht darauf, Decken- und Bodenseiten des entsprechenden Gegenstands mit vertikalen Verbindungsfasern zu verknüpfen und unter hohem Innendruck in der gewünschten Form zu halten. Es kann hierdurch ein Gewebe erhalten werden, welches durch eine große Zahl an Verknotungen sehr reißfest und formstabil ist und hohen Belastungen standhalten kann.

Die Erfindung wird nachstehend anhand von Zeichnungen näher erläutert. Hierbei zeigt:
- Fig. 1:: einen Ausschnitt einer schematischen Darstellung einer erfindungsgemäßen Wohnraumerweiterung in einer Gebrauchsstellung;
- Fig. 2:: eine vereinfachte schematische Darstellung eines Ausschnitts einer erfindungsgemäßen Wohnraumerweiterung;
- Fig. 3:: eine weitere vereinfachte schematische Darstellung eines Ausschnitts einer erfindungsgemäßen Wohnraumerweiterung;
- Fig. 4:: eine schematische Detailansicht der erfindungsgemäßen Wohnraumerweiterung gemäß den Fig. 1 bis 3;
- Fig. 5:: eine weitere vereinfachte schematische Darstellung eines Ausschnitts einer erfindungsgemäßen Wohnraumerweiterung;

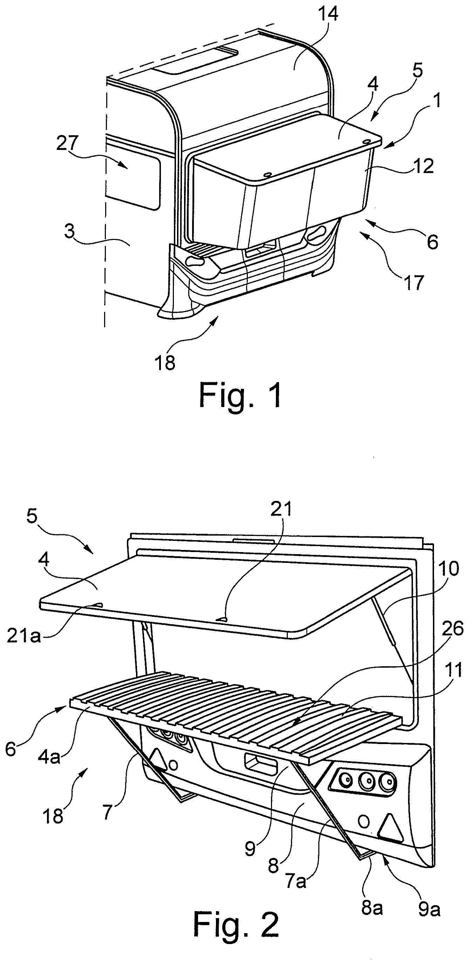

Fig. 1 zeigt einen Ausschnitt einer schematischen Darstellung einer erfindungsgemäßen Wohnraumerweiterung 1 in einer Gebrauchsstellung. In dieser Gebrauchsstellung wird ein Innenvolumen 27 des Wohnwagens 14 durch die Wohnraumerweiterung 1, die an der Außenseite 18 des Wohnaufbaus 3 angeordnet ist, vergrößert. Die Wohnraumerweiterung 1 ist am Heck 17 des Wohnwagens 14 angeordnet.

Die Wohnraumerweiterung 1 ist als schwenkbare Wohnraumerweiterung 1 ausgestaltet und umfasst Schwenkelemente 4, 4a (siehe auch Fig. 2). Ein erstes Schwenkelement 4 bildet eine Oberseite 5 der Wohnraumerweiterung 1 und ein zweites Schwenkelement (siehe Fig. 2) bildet eine Unterseite 6 der Wohnraumerweiterung 1.

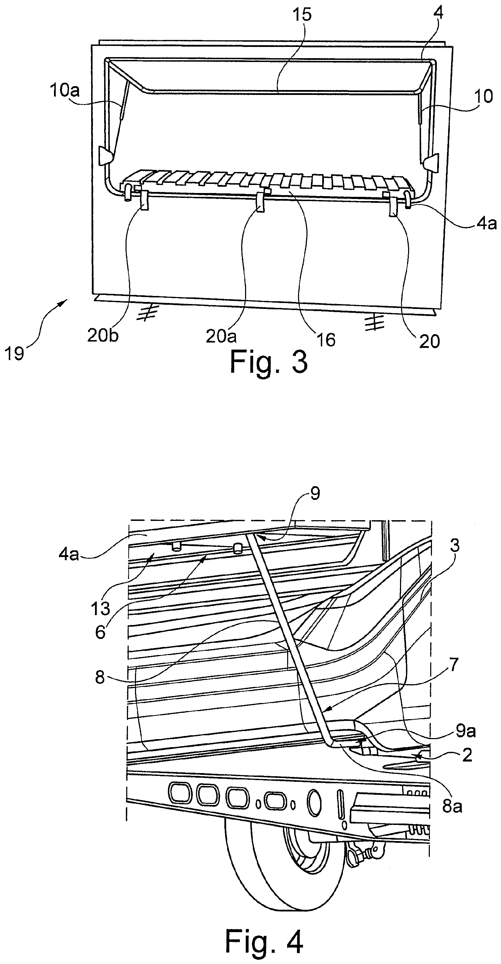

Aus der Fig. 2 ist weiterhin ersichtlich, dass die Wohnraumerweiterung Stützmittel 7, 7a umfasst. Die Stützmittel 7, 7a sind als Abstützelement der Unterseite 6 der Wohnraumerweiterung 1 ausgestaltet. Mittels der Stützmittel 7, 7a ist das zweite Schwenkelement 4a an dem Chassis 2 abgestützt (siehe Fig. 4).

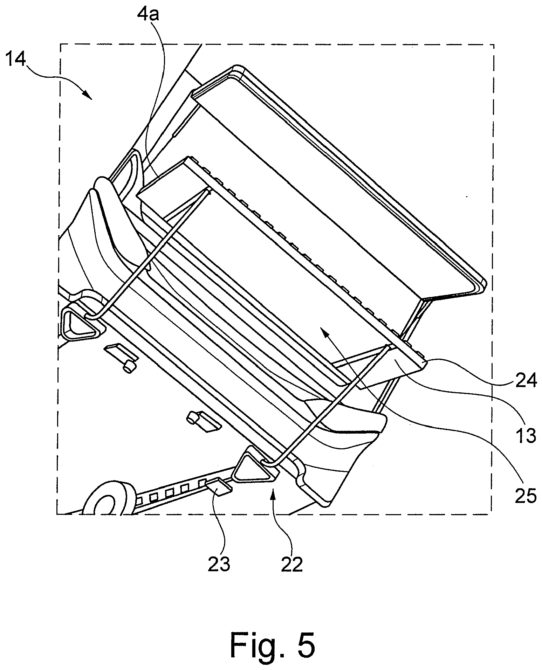

Wie aus der Fig. 4 ersichtlich ist, sind die Stützmittel (aus Gründen vereinfachter Darstellung ist lediglich Stützmittel 7 dargestellt) den Wohnaufbau 3 teilweise untergreifend angeordnet, um so eine stabile Abstützung des zweiten Schwenkmittels 4a zu ermöglichen, ohne dabei den Wohnaufbau 3 baulich verändern zu müssen, beispielsweise durch Anbringen geeigneter Haltemittel für die Stützmittel. Die Stützmittel 7, 7a sind somit bei Abstützung der Wohnraumerweiterung teilweise an einer Unterseite 22 des Wohnwagens 14 angeordnet (siehe Fig. 5)

Im Ausführungsbeispiel sind die Stützmittel 7, 7a je an einer am Chassis 2 angeordneten Stütze befestigt, wobei aus Gründen vereinfachter Darstellung lediglich eine Stütze 23 dargestellt ist, an der das Stützmittel 7 befestigt ist (siehe Fig. 5). Die Stütze 23 kann als bekannte Wohnwagen-Hubstütze ausgebildet sein. Sofern die Stütze 23 eine Kurbel oder Spindel oder ähnliches umfasst, um betätigt zu werden, kann vorgesehen sein, dass das Stützmittel an dieser Kurbel,

Spindel, etc. angeordnet ist bzw. daran gehalten bzw. befestigt ist.

Aus den Fig. 2, 4 und 5 ist ersichtlich, dass die Stützmittel 7, 7a einstückig ausgebildet sind. Im Ausführungsbeispiel ist gezeigt, dass die Stützmittel 7, 7a L-förmig mit einem erstem Schenkel 8 und einem zweitem Schenkel 8b ausgebildet ist, wobei ein freies Ende 9 des ersten Schenkels 8a mit dem zweiten Schwenkelement 4a und ein freies Ende 9a des zweiten Schenkels 8a mit dem Chassis 2 verbunden ist (siehe Fig. 2, 4 und 5). Es kann auch vorgesehen sein, dass die Stützmittel gekrümmt, gebogen oder abgewinkelt ausgebildet sin (nicht gezeigt).

Die Wohnraumerweiterung 1 kann errichtet werden, indem ein erstes Schwenkelement 4 in Richtung einer Oberseite 5 hin zu einer Außenseite 18 geschwenkt wird (siehe z.B. Fig. 2). Hierfür kann vorgesehen sein, dass das erste Schwenkelement Schwenkmittel 10, 10a umfasst. Vorliegend sind die Schwenkmittel 10, 10a als Gasdruckfeder ausgestaltet. Anschließend kann das zweite Schwenkelement 4a, das in Ruheposition an der Innenseite 19 (Fig. 3) angeordnet ist, hin zu Außenseite 18 geschwenkt werden.

Aufgrund der Anordnungen der Schwenkelemente 4, 4a in Ruheposition, d.h. in einer Position, in der keine Wohnraumerweiterung errichtet ist (nicht dargestellt), kann das erste Schwenkelement 4 als Außenelement 15 und das zweite Schwenkelement 4a als Innenelement 16 aufgefasst werden. Das Innenelement 16 ist mittels Befestigungsmitteln 20, 20a, 20b an der Innenseite 19 schwenkbar befestigt (Fig. 3). Das Außenelement 15 umfasst ferner Verriegelungsmittel 21, 21a (siehe Fig. 2), mittels denen das Außenelement 15 bzw. das erste Schwenkelement 4 bei nicht errichteter Wohnraumerweiterung, verriegelbar ist.

Das zweite Schwenkelement 4a und das erste Schwenkelement 4 über ein flexibles Verbindungsmittel 12 miteinander verbunden, wodurch die Wohnraumerweiterung 1 beim Schwenken beider Schwenkelemente 4, 4a bereitgestellt wird. Das flexible Verbindungsmittel kann als Zeltwand ausgebildet sein.

Zur Nutzung der Wohnraumerweiterung 1, beispielsweise als Schlaf- bzw. Liegefläche, ist es erforderlich, eine Abstützung der Wohnraumerweiterung 1 vorzunehmen, wofür die Stützmittel 7, 7a vorgesehen sind. Um eine möglichst günstige Kraftverteilung bei der Abstützung zu erzielen, sind die Stützmittel 7, 7a an einer Fläche 13 des zweiten Schwenkelements 4a an der Unterseite 6 angeordnet (siehe Fig. 5). Die Fläche 13 entspricht einer Unterseite 25 des zweiten Schwenkelements 4a. Somit sind die Stützmittel 7, 7a an einem rahmenfernen Bereich der Fläche 13 bzw. nicht am Rahmen 24 des zweiten Schwenkelements 4a angeordnet. Im Ausführungsbeispiel sind die Stützmittel 7, 7a zur Verbesserung der Stützwirkung mit der Fläche 13 verschraubt. Im Ausführungsbeispiel ist das zweite Schwenkelement 4a als Liegeeinheit ausgebildet und umfasst ein Lattenrost 11 (siehe Fig. 2). Das Lattenrost 11 ist an einer Oberseite 26 des zweiten Schwenkelements 4a angeordnet. Das Mitführen einer separaten Liegeeinheit kann bei dieser Ausgestaltung entfallen.

### Bezugszeichenliste:

- 1: Wohnraumerweiterung
- 2: Chassis
- 3: Wohnaufbau
- 4: erstes Schwenkelement
- 4a: Zweites Schwenkelement
- 5: Oberseite
- 6: Unterseite
- 7: Stützmittel
- 7a: Stützmittel
- 8: erster Schenkel
- 8b: zweiter Schenkel
- 9: freies Ende
- 9a: freies Ende
- 10: Schwenkmittel
- 10a: Schwenkmittel
- 11: Lattenrost
- 12: Verbindungsmittel
- 13: Fläche
- 14: Wohnwagen
- 15: Außenelement
- 16: Innenelement
- 17: Heckbereich
- 18: Außenseite
- 19: Innenseite
- 20: Befestigungsmittel
- 20a: Befestigungsmittel
- 20b: Befestigungsmittel
- 21: Verriegelungsmittel
- 21a: Verriegelungsmittel
- 22: Unterseite (des Wohnwagens)
- 23: Stütze
- 24: Rahmen
- 25: Unterseite (des zweiten Schwenkelements)
- 26: Oberseite (des zweiten Schwenkelements)
- 27: Innenvolumen (des Wohnwagens)

## Patentansprüche

1. Wohnraumerweiterung (1) für einen Wohnwagen (14) oder dergleichen Reise- oder Freizeitfahrzeug mit einem Chassis (2) und einem darauf angeordneten Wohnaufbau (3), wobei die Wohnraumerweiterung (1) als schwenkbare Wohnraumerweiterung (1) ausgestaltet ist und wenigstens zwei Schwenkelemente (4, 4a) umfasst, wobei ein erstes Schwenkelement (4) eine Oberseite (5) der Wohnraumerweiterung(1) bildet und wobei ein zweites Schwenkelement (4a) eine Unterseite (6) der Wohnraumerweiterung (1) bildet, und wobei die Wohnraumerweiterung (1) zumindest ein Stützmittel (7, 7a) umfasst,
**dadurch gekennzeichnet, dass**
das zumindest eine Stützmittel (7, 7a) als Abstützelement der Unterseite (6) ausgestaltet ist und das zweite Schwenkelement (4a) an dem Chassis (2) abgestützt ist.

2. Wohnraumerweiterung (1) nach Anspruch 1, **dadurch gekennzeichnet, dass** das zumindest eine Stützmittel (7, 7a) den Wohnaufbau (3) teilweise untergreifend angeordnet ist.

3. Wohnraumerweiterung (1) nach Anspruch 1 oder 2, **dadurch gekennzeichnet, dass** das zumindest eine Stützmittel (7, 7a) einstückig ausgebildet ist.

4. Wohnraumerweiterung (1) nach einem der vorangehenden Ansprüche, **dadurch gekennzeichnet, dass** das zumindest eine Stützmittel (7, 7a) gekrümmt, gebogen oder abgewinkelt ausgebildet ist.

5. Wohnraumerweiterung (1) nach einem der vorangehenden Ansprüche, **dadurch gekennzeichnet, dass** das zumindest eine Stützmittel (7, 7a) L-förmig mit einem erstem Schenkel (8) und einem zweitem Schenkel (8b) ausgebildet ist, wobei ein freies Ende (9) des ersten Schenkels (8a) mit dem zweiten Schwenkelement (4a) und ein freies Ende (9a) des zweiten Schenkels (8a) mit dem Chassis (2) verbunden ist.

6. Wohnraumerweiterung (1) nach einem der vorangehenden Ansprüche, **dadurch gekennzeichnet, dass** das erste Schwenkelement (4) wenigstens ein Schwenkmittel (10), vorzugsweise eine Gasdruckfeder umfasst, welches mit dem Wohnaufbau (3) verbunden ist.

7. Wohnraumerweiterung (1) nach einem der vorangehenden Ansprüche, **dadurch gekennzeichnet, dass** das zweite Schwenkelement (4a) und das erste Schwenkelement (4) über ein flexibles Verbindungsmittel (12), insbesondere Zeltwand, miteinander verbunden sind.

8. Wohnraumerweiterung (1) nach einem der vorangehenden Ansprüche, **dadurch gekennzeichnet, dass** das wenigstens eine Stützmittel (7, 7a) an einer Fläche (13), vorzugsweise an einem rahmenfernen Bereich der Fläche (13) angeordnet und insbesondere verschraubt ist.

9. Wohnraumerweiterung (1) nach einem der vorangehenden Ansprüche, **dadurch gekennzeichnet, dass** das zumindest eine Stützmittel (7, 7a) an einer am Chassis (2) angeordneten Stütze (23) befestigt ist.

10. Wohnraumerweiterung (1) nach einem der vorangehenden Ansprüche, **dadurch gekennzeichnet, dass** die Wohnraumerweiterung zumindest teilweise durch ein aufblasbares Zelt oder eine aufblasbare Zeltwand gebildet wird, wobei das aufblasbare Zelt oder die aufblasbare Zeltwand ein drop-stitch Material umfasst oder aus einem drop-stitch Material gefertigt ist.

11. Wohnraumerweiterung (1) nach einem der vorangehenden Ansprüche 1 bis 9, **dadurch gekennzeichnet, dass** die Wohnraumerweiterung zumindest teilweise durch ein aufblasbares Zelt oder eine aufblasbare Zeltwand gebildet wird, wobei das aufblasbare Zelt oder die aufblasbare Zeltwand zur Bereitstellung statisch tragender Eigenschaften des Zelts oder der Zeltwand wenigstens einen Luftkanal, bevorzugt mehrere insbesondere nicht miteinander kommunizierende Luftkanäle umfasst.

12. Wohnwagen (14), umfassend ein Chassis (2) und einem darauf angeordneten Wohnaufbau (3),
**dadurch gekennzeichnet, dass**
der Wohnwagen (14) eine Wohnraumerweiterung (1) nach einem der Ansprüche 1 bis 11 umfasst.

13. Wohnwagen (14), umfassend ein Chassis (2) und einem darauf angeordneten Wohnaufbau (3),
**dadurch gekennzeichnet, dass**
der Wohnwagen (14) zwei Schwenkelemente (4, 4a) umfasst, wobei ein erstes Schwenkelement (4) als Außenelement (15) ausgebildet ist und wobei ein zweites Schwenkelement als Innenelement (16) ausgebildet ist, wobei zur Bereitstellung einer Wohnraumerweiterung (1) das Außenelement in Richtung einer Oberseite (5) und das Innenelement in Richtung einer Unterseite (6) schwenkbar ausgebildet ist und wobei das Außenelement (15) und das Innenelement (16) über ein flexibles Verbindungsmittel (12), insbesondere Zeltwand, miteinander verbunden sind.

14. Wohnwagen (14) nach Anspruch 12, **dadurch gekennzeichnet, dass** das flexible Verbindungsmittel (12) als aufblasbare Zeltwand oder als aufblasbares Zelt ausgebildet ist.

15. Wohnwagen (14) nach Anspruch 12 oder 13, **dadurch gekennzeichnet, dass** das flexible Verbindungsmittel (12) ein drop-stitch Material umfasst oder aus einem drop-stitch Material gefertigt ist oder dass das flexible Verbindungsmittel (12) zur Bereitstellung tragender Eigenschaften des flexiblen Verbindungsmittels (12) wenigstens einen Luftkanal, bevorzugt mehrere insbesondere nicht miteinander kommunizierende Luftkanäle umfasst.
